# EUROPEAN PATENT APPLICATION

(11) **EP 1 865 284 A1**
(43) Date of publication of application: **12.12.2007**
(21) Application number: 06728607.0
(22) Date of filing: 03.03.2006
(51) Int. Cl.: G01C 21/00, G08G 1/0969, G09B 29/10

(54) **ROUTE DISPLAY DEVICE, ROUTE DISPLAY METHOD, ROUTE DISPLAY PROGRAM, AND RECORDING MEDIUM**

(30) Priority: 30.03.2005 JP 2005100166
(71) Applicant: Pioneer Corporation, Tokyo 153-8654 (JP)
(72) Inventor: WATANABE, Tomo, Pioneer Corp. Corporate Research, Tsurugashima-shi, Saitama 35 (JP); MATSUMOTO, Reiji Pioneer Corp. Corporate Research, Tsurugashima-shi, Saitamhi, Saitama 35 (JP); ADACHI, Hajime Pioneer Corp. Corporate Reseach, Tsurugashima-shi, Saitama 35 (JP)
(74) Representative: Haley, Stephen
(86) International application number: PCT/JP2006/304128
(87) International publication number: WO 2006/112174

(57) **Abstract**

A route display apparatus (200) includes an extracting unit (201) that extracts point information that concerns a city existing along a guide route to a destination, a display unit (202) that includes a display screen that displays the guide route, and a display control unit (203) that displays a schematic route that is formed with the point information that concerns a city and is extracted by the extracting unit (201) and at least one single line segment that connects the point information according to the guide route. This enables to visually and efficiently inform through which cities the guide route passes, and to facilitate understanding of the scheme of the guide route.

## Description

### TECHNICAL FIELD

The present invention relates to a route display apparatus, a route display method, a route display program, and a recording medium. The application of the present invention is not limited to the route display apparatus, the route display method, the route display program, and the recording medium.

### BACKGROUND ART

A navigation device that retrieves a route to a destination and displays a retrieved guide route on a display along with a map has been used (for example, Patent Document 1 below). A navigation device that displays all routes when plural routes are retrieved is also available.

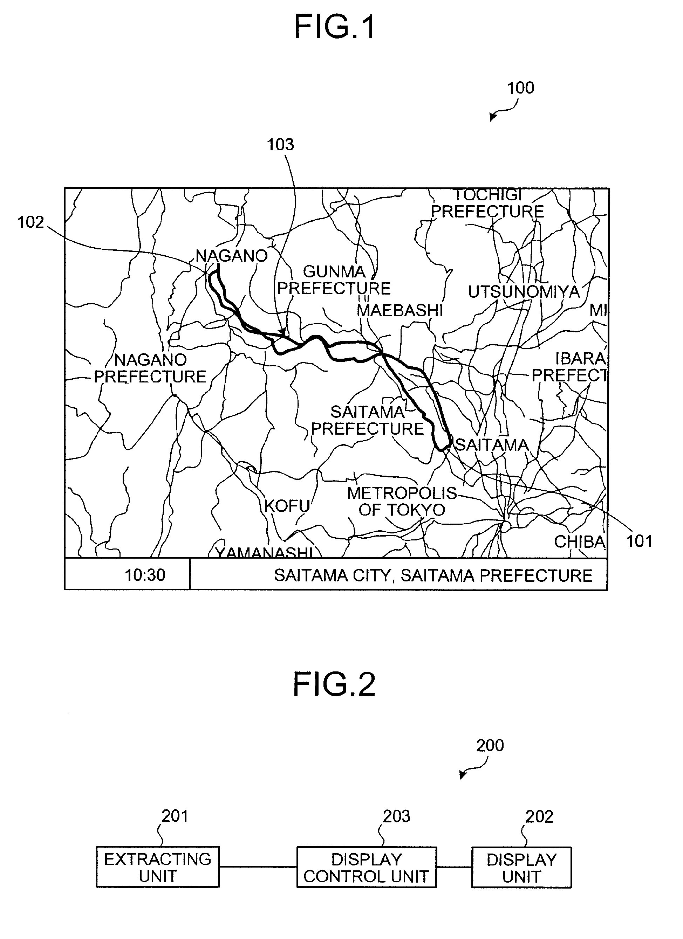

Fig. 1 is a front view of one example of a display screen of a conventional navigation device. Among conventional navigation devices is a navigation device that displays a guide route 103 such that a departure point 101 and a destination point 102 are displayed within the same screen such as on a display screen 100 shown in Fig. 1.

Patent Document 1: Japanese Patent Laid-Open Publication No. 2004-45185

### DISCLOSURE OF INVENTION

### PROBLEM TO BE SOLVED BY THE INVENTION

In the retrieval of a guide route, there may be a case when plural routes are initially planned by a user, even for the same destination point, such as, when a user designates a transit point. Specifically, for example, plural courses may be conceived by a user judging from a map, such as course A via point A and course B via point B.

However, presently, the display method does not show specific city names along the guide routes, even when the guide routes pass through a transit point planned by the user. Hence, a problem has been cited in that at the time of selecting a route, judgment is difficult.

### MEANS FOR SOLVING PROBLEM

A route display apparatus according to an invention of claim 1 includes an extracting unit that extracts point information on a city existing along a guide route to a destination; a display unit that includes a display screen that displays the guide route; and a display control unit that displays a schematic route that is formed with the point information, extracted by the extracting unit, and at least one single line segment that connects the point information according to the guide route.

A route display method according to an invention of claim 5 includes an extracting step of extracting point information on a city existing along a guide route to a destination; and a display step of displaying a schematic route that is formed with the point information extracted at the extracting step and at least one single line segment that connects the point information according to the guide route.

A route display program according to an invention of claim 6 causes a computer to execute the route display method according to claim 5.

A recording medium according to an invention of claim 7 stores therein the route display program according to claim 6 in a computer-readable manner.

### BRIEF DESCRIPTION OF DRAWINGS

Fig. 1 is a front view of one example of a display screen of a conventional navigation device;
Fig. 2 is a block diagram illustrating a functional configuration of a route display apparatus according to a present embodiment;
Fig. 3 is a flowchart illustrating procedures in a process performed by the route display apparatus according to the present embodiment;
Fig. 4 is a block diagram illustrating one example of a hardware configuration of a navigation device according to a first example;
Fig. 5 is a flowchart illustrating procedures in the process performed by the navigation device according to the first example;
Fig. 6 is an explanatory diagram illustrating the wide-area city name database;
Fig. 7 is an explanatory diagram illustrating the detailed city name database;
Fig. 8 is a front view of one example of the display screen;
Fig. 9 is a front view of another example of the display screen;
Fig. 10 is a front view of another example of the display screen;
Fig. 11 is a flowchart illustrating procedures in a process performed by a navigation device according to a second example;
Fig. 12 is an explanatory diagram illustrating a parcel and a polygon among map data used in a common navigation device; and
Fig. 13 is a flowchart illustrating procedures in a process performed by the navigation device according to the third example.

### EXPLANATIONS OF LETTERS OR NUMERALS

- 200: Route display apparatus
- 201: Extracting unit
- 202: Display unit
- 203: Display control unit

### BEST MODE(S) FOR CARRYING OUT THE INVENTION

Exemplary embodiments of a route display apparatus, a route display method, a route display program, and a recording medium according to the present invention are explained in detail below with reference to the accompanying drawings.

### (Functional Configuration of Route Display Apparatus)

Fig. 2 is a block diagram illustrating a functional configuration of a route display apparatus according to a present embodiment. A route display apparatus 200 includes an extracting unit 201, a display unit 202, and a display control unit 203.

The extracting unit 201 extracts point information that concerns cities existing on a guide route to a destination point. The point information that concerns cities is extracted by the extracting unit 201 and includes a city name, position coordinates of the city, and the like. The display unit 202 includes a display screen that displays a guide route.

The display control unit 203 displays a schematic route that is formed using the point information that concerns cities and is extracted by the extracting unit 201 and single line segments that connect, corresponding to the guide route, the point information. Specifically, the display control unit 203 displays the schematic route by controlling the display screen. The display control unit 203 can display the schematic route corresponding to the position coordinates included in the point information extracted by the extracting unit 201.

Moreover, the display control unit 203 can be configured to display the schematic route by using single line segments having a fixed length to connect the point information extracted by the extracting unit 201. Alternatively, the display control unit 203 can be configured to display the schematic route by using single line segments having lengths that correspond to distances between the point information to connect the point information extracted by the extracting unit 201. The single line segments connecting the point information can be straight lines or curved lines.

### (Procedures of Process by Route Display Apparatus)

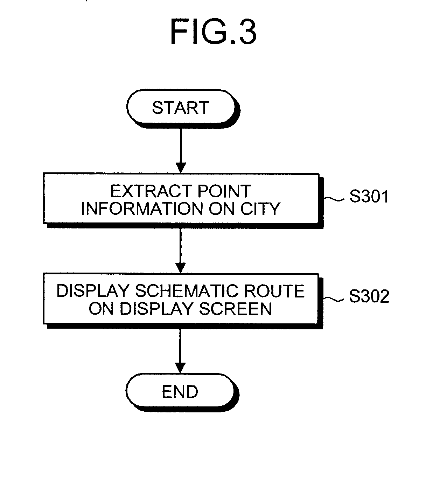

Fig. 3 is a flowchart illustrating procedures in a process performed by the route display apparatus according to the present embodiment. In the process shown in Fig. 3, first, point information that concerns a city existing along a guide route is extracted (step S301). Thus, an extracting step is achieved.

Next, a schematic route is displayed and formed using the point information extracted at the extracting step and single line segments that connect, according to the guide route, the point information (step S302). Thus, a display step is achieved.

At step S302, for example, based on the extracted point information, the extracted point information is displayed in positional relation corresponding to the position coordinates included in the point information. Furthermore, at step S302, for example, a schematic route can be displayed that is obtained by connecting the extracted position information with single line segments having a fixed length. Moreover, at step S302, for example, a schematic route can be displayed that is obtained by connecting the extracted position information with single line segments having lengths corresponding to a distance between the point information.

As described above, according to the present embodiment, a schematic route that is formed using point information that concerns a city existing on a guide route to a destination and single line segments that connect the point information according to the guide route is displayed. This enables to visually and efficiently convey through which cities the guide route passes, thereby facilitating understanding of the scheme of the guide route.

Moreover, according to the present embodiment, for example, when the schematic route is displayed in positional relation corresponding to the position coordinates included in the extracted point information, it is possible to convey the entire the guide route including cities existing along the guide route according to the actual relative position of cities. This enables to understand the scheme of the guide route together with the relative position of the cities existing on the guide route.

On the other hand, for example, when the schematic route is displayed by connecting the extracted point information with single line segments having a fixed length, it is possible to display the scheme of the guide route as a simple diagram. This enables to convey the scheme of the guide route simply.

In addition, for example, when the schematic route is displayed by connecting the extracted point information with single line segments having lengths corresponding to distances between the point information, it is possible to display the scheme of the guide route as a simple diagram that also corresponds to actual relative distances between cities. This enables to understand the relative distances between cities existing along the guide route, in addition to conveying the scheme of the guide route simply.

### First Example

### (Hardware Configuration of Navigation Device)

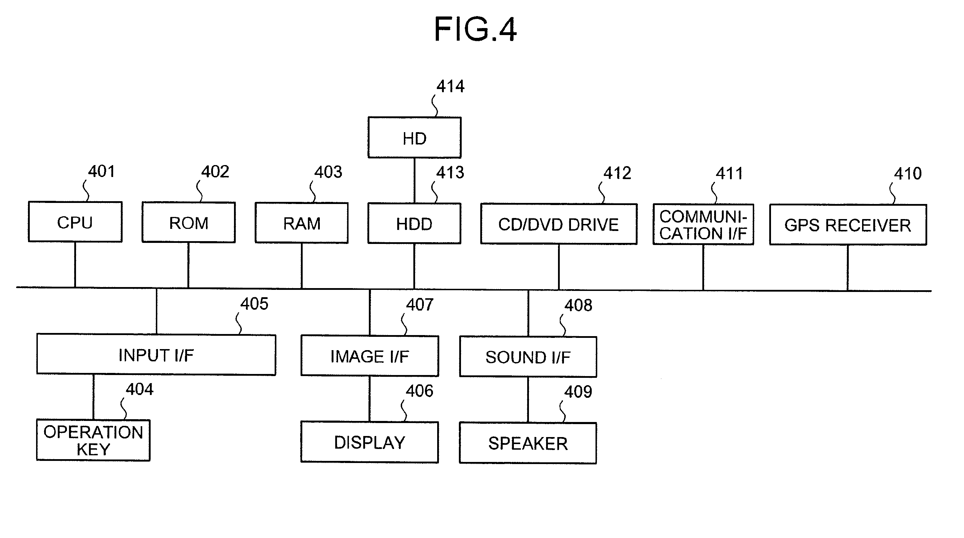

Fig. 4 is a block diagram illustrating one example of a hardware configuration of a navigation device according to a first example. The navigation device according to the present example includes a CPU 401, a ROM 402, a RAM 403, an operation key 404, an input I/F 405, a display 406, an image I/F 407, a sound I/F 408, a speaker 409, a GPS receiver 410, a communication I/F 411, a CD/DVD drive 412, an HDD 413, and an HD 414.

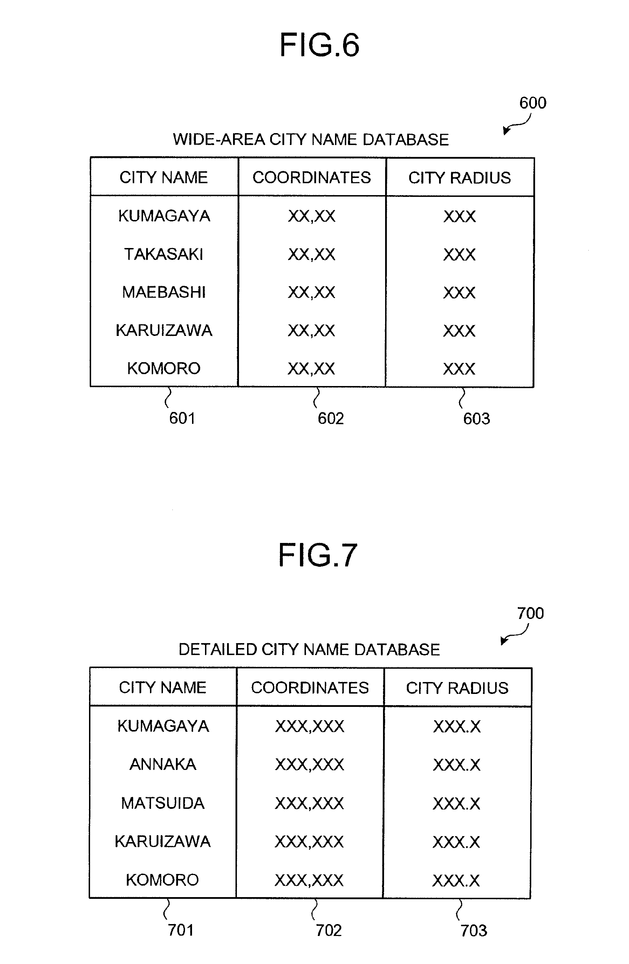

The HD 414 stores a city name database. This city name database is used for processing by the navigation device described hereinafter. In the city name database, point information that concerns cities is stored. The point information that concerns cities includes, for example, a name of a city (city name), position coordinates of each city, and the like. Although details are described hereinafter, in the present example, two city name databases are stored and include a wide-area city name database (see Fig. 6) that mainly stores well-known city names and a detailed city name database (see Fig. 7) that additionally stores point information concerning cities other than those stored in the wide-area city name database.

### (Procedures in Process by Navigation Device)

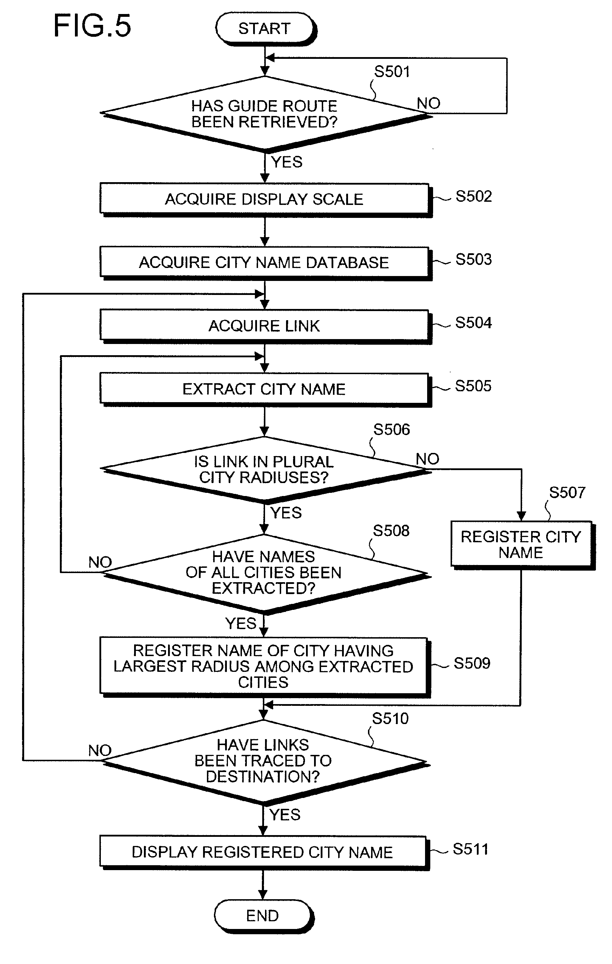

Fig. 5 is a flowchart illustrating procedures in the process performed by the navigation device according to the first example. With reference to Fig. 5, the procedures in the process performed by the navigation device according to the first example are explained. In the process shown in Fig. 5, first, waiting occurs until it is determined that a guide route has been retrieved (step S501: NO). The process of retrieving the guide route is a conventional technology, and therefore, illustration and explanation thereof are omitted herein.

When it is determined that the guide route has been retrieved (step S501: YES), a display scale is acquired (step S502). The display scale is such a scale that enables display of the entire guide route in one screen such that a departure point and a destination point are displayed within the same screen. The display scale is arbitrarily determined and is set, for example, by a user.

Subsequently, a city name database that corresponds to the extracted display scale is acquired (step S503). Although details are explained hereinafter, the city name database stores city names of a plurality of cities, position coordinates of a central position of the cities, and city radiuses. The position coordinates are expressed, for example, by latitude and longitude. The city radius is a radius of a circle that includes a city on a map. A plurality of the city name databases corresponding to the display scales is prepared. In the present example, two kinds of databases including the wide-area city name database and the detailed city name database are provided. At step S503, either the wide-area city name database or the detailed city name database is acquired corresponding to the display scale that is acquired at step S502.

One link of a series of links forming the guide route is acquired (step S504). In the present example, at step S504, among the series of links forming the route, a link at the departure point is acquired first. Subsequently, a name of a city that includes the acquired link is extracted based on the acquired city name database (step S505).

Next, it is determined whether the acquired link is positioned within plural city radiuses (step 5506). When it is determined that the acquired link is not within plural city radiuses, in other words, when the acquired link is present within a single city radius (step S506: NO), the extracted city name is registered (step S507), and the process proceeds to step S510. At registering the city name at step S507, for example, a memory area is prepared in advance in the RAM 403 or the HD 414, and the city name is registered in this memory area.

When it is determined that the acquired link is positioned within plural city radiuses (step S506: YES), it is determined whether names of all cities that include the acquired link have been extracted (step S508). When it is determined that the names of all cities that include the link have not been extracted (step S508: NO), the process proceeds to step S505.

When it is determined that the names of all cities that include the acquired link have been extracted (step S508: YES), a name of a city having the largest radius among the plural city names is registered (step S509). Next, it is determined whether links have been traced to the destination (step S510). When it is determined that the links have not been traced to the destination (step S510: NO), the process proceeds to step S504. At step S504 following step S510, for example, among links forming the route, a link at the departure point is acquired first, and subsequently, links are acquired sequentially along the route.

When it is determined that links have been traced to the destination (step S510: YES), the registered city names are displayed on the display 406 (step S511), and the process is ended.

Fig. 6 is an explanatory diagram illustrating the wide-area city name database, and Fig. 7 is an explanatory diagram illustrating the detailed city name database. A wide-area city name database 600 and a detailed city name database 700 have areas 601 and 701 in which city names of a plurality of cities are stored, area 602 and 702 in which position coordinates are stored, and areas 603 and 703 in which city radiuses are stored, respectively.

The position coordinates and the city radiuses are associated with the respective city names. The city names that are stored in the wide-area city name database 600 correspond to cities that satisfy a predetermined conditions, such as cities having a population larger than a predetermined number of people, cities having industries or tourist spots that are famous nationwide, and cities having bullet train stations. In the detailed city name database 700, in addition to the city names stored in the wide-area city name database 600, city names that are not stored in the wide-area city name database 600 are stored. Either the wide-area city name database 600 or the detailed city name database 700 is used depending on the display scale.

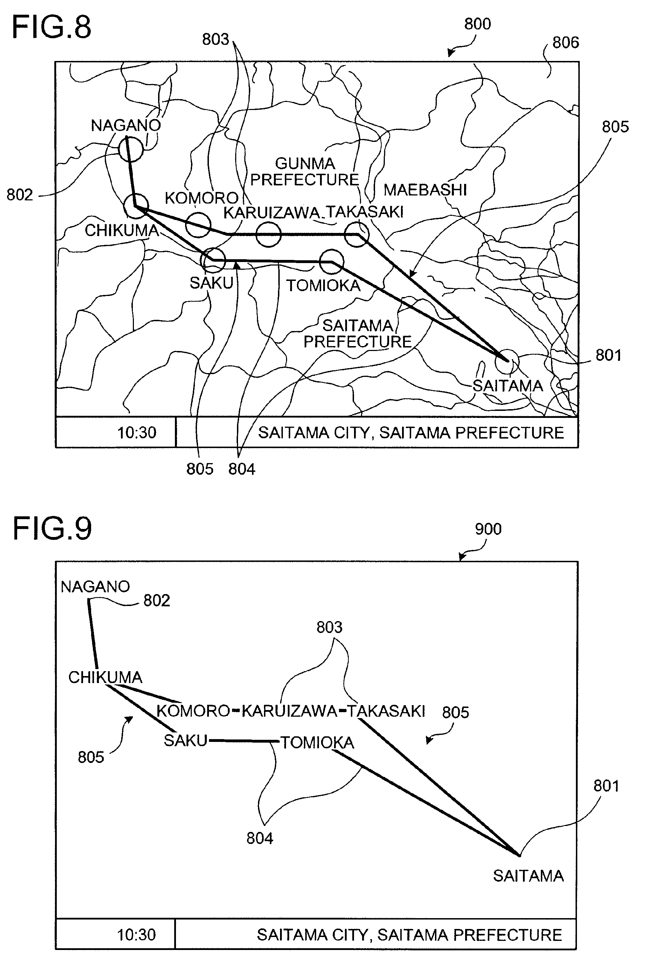

Fig. 8 is a front view of one example of the display screen. A display screen 800 shown in Fig. 8 is displayed at step S511 shown in Fig. 5. In the display screen 800, extracted city names 803 are displayed superimposed on a map whose scale is adjusted so that a departure point (a point in Saitama City in this example) 801 and a destination point 802 (a point in Nagano City in this example) 802 are displayed within the same display screen.

In the display screen 800, the city names 803 that are extracted based on the city name database 600 or 700 corresponding to the adjusted display scale are displayed. Between the displayed city names, a single line segment 804 connecting each of the city names 803 is displayed. In the display screen 800, a schematic route 805 is displayed using the city names 803 and the single line segments 804. The single line segments 804 are not limited to straight lines, and for example, a curved line can be used. The schematic route 805 is displayed superimposed on a map 806. In the display screen 800, the city names 803 are displayed in positional relation corresponding to the position coordinates of the city names 803.

Fig. 9 is a front view of another example of the display screen. In a display screen 900 shown in Fig. 9, the map 806 displayed superimposed on the city names 803 in Fig. 8 is removed and only the city names 803 are displayed. In the display screen 900, the city names 803 are displayed in positional relation corresponding to the position coordinates of the city names 803.

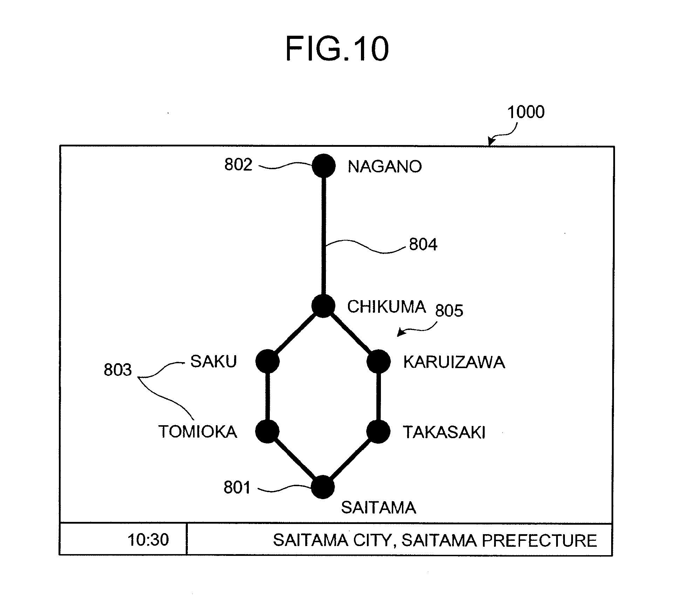

Fig. 10 is a front view of another example of the display screen. In a display screen 1000 shown in Fig. 10, the schematic route 805 is displayed and formed by the city names 803 and single line segments 804 that connect the city names 803 displayed in an order following the guide route irrespective of the positional relation of each city on the map 806. In the display screen 1000, the schematic route 805 is displayed such that the city names 803 are connected by the single line segments 804 that have a fixed length. The length of the single line segments 804 is not limited to a fixed length. Although illustration is omitted, the schematic route 805 can be displayed such that the city names 803 are connected by the single line segments 804 that have lengths corresponding to the distance between cities.

As described above according to the navigation device of the present example, when the guide route to the destination point 802 is retrieved, the schematic route 805 is displayed and formed with the city names 803 as the point information that concerns cities existing on the guide route and the single single line segments 804 connecting the city names 803 according to the guide route to the destination point 802. Therefore, the schematic route 805 enables to visually and efficiently convey through which cities the guide route passes, to thereby facilitate understanding of the scheme of the guide route.

Moreover, according to the navigation device of the example, at step S510, as shown in Figs. 8 and 9, the extracted city names 803 are displayed in positional relation corresponding to the position coordinates of the indicated cities, thereby enabling to convey the entire the guide route including cities existing along the guide route and the actual relative position of the cities. This enables to understand the scheme of the guide route together with the relative position of the cities existing on the guide route.

On the other hand, according to the navigation device of the present example, at step S510, when the schematic route 805 is displayed such that the extracted city names 803 are connected by single line segments having a fixed length as shown in Fig. 10, it is possible to display the scheme of the guide route as a simple diagram. This enables to inform the scheme of the guide route simply.

In addition, although illustration is omitted, according to the navigation device of the present example, when the schematic route is displayed such that the extracted city names 803 are connected by the single line segments having lengths corresponding to the distance between the indicated cities at step S510, it is possible to display the scheme of the guide route as a simple diagram and to convey the actual distance between the cities. This enables to understand the relative distance of cities existing along the guide route, in addition to convey the scheme of the guide route simply.

### Second Example

### (Procedures in Process by Navigation Device)

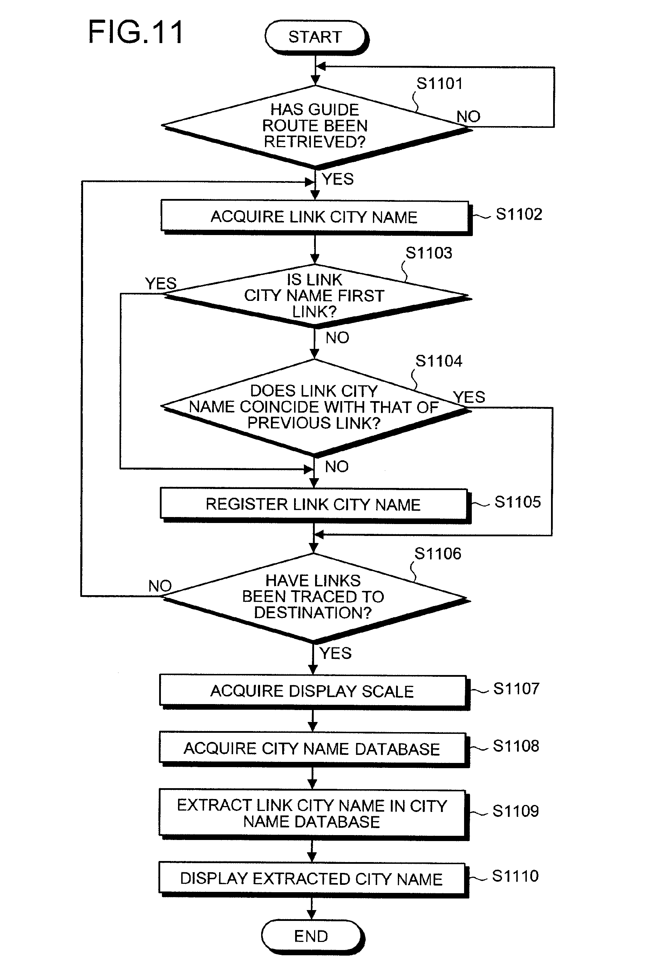

Fig. 11 is a flowchart illustrating procedures in a process performed by a navigation device according to a second example. Like reference characters refer to like parts in the first example described above, and the explanation thereof is omitted. The same applies hereinafter. With links of this example, information such as names of cities including respective links (link city name) and position coordinates of the links are associated. The link city names can be associated with nodes. In the present example, in either the RAM 403 or the HD 414, a memory area that is used for registration of the link city names at the time of execution of the process by the navigation device is secured. The memory area used to register the link city names is not limited to the RAM 403 or the HD 414.

Although illustration is omitted, at the process by the navigation device according to the present example, a city name database similar to the wide-area city name database 600 and the detailed city name database 700 shown in Figs. 6 and 7 is used. The city name database is not required to include the information on city radiuses, which is included in the wide-area city name database 600 and the detailed city name database 700, in the process performed by the navigation device according to the present example.

In the process shown in Fig. 11, first, waiting occurs until it is determined that a guide route has been retrieved (step S1101: NO). When it is determined that a guide route has been retrieved (step S1101: YES), a link city name is acquired (step S1102). Next, it is determined whether a link corresponding to the acquired link city name is the first link (link or node including the departure point) (step S1103).

When it is determined that the link corresponding to the acquired link city name is the first link (step S1103: YES), the process proceeds to step S1105. On the other hand, when it is determined that the link corresponding to the acquired link name is not the first link (step S1103: NO), it is determined whether the acquired link city name coincides with a link city name of the previous link (step S1104).

When it is determined that the acquired link city name coincides with the link city name of the previous link (step S1104: YES), the process proceeds to step S1106. On the other hand, when it is determined that the link city name does not coincide with the link city name of the previous link (step S1104: NO), the acquired link name is registered (step S1105).

Subsequently, it is determined whether links have been traced to the destination point (step S1106). When it is determined that links have not been traced to the destination (step S1106: NO), the process proceeds to step S1102. On the other hand, when it is determined that links have been traced to the destination (step S1106: YES), a display scale is acquired (step S1107). A city name database corresponding to the acquired display scale is then acquired (step S1108).

Although illustration is omitted, at step S1108, a city name database similar to the wide-area city name database 600 and the detailed city name database 700 shown in Figs. 6 and 7 is acquired. The acquired city name database can be the same city name database as the wide-area city name database 600 and the detailed city name database 700 shown in Figs. 6 and 7, or can be a database that does not include the city radiuses.

Based on the acquired city name database, a city name that coincides with the registered city name is extracted from city names stored in the city name database (step S1109). Subsequently, the extracted city name is displayed on the display (step S1110), and the process is ended. The display mode is similar to that of the display screens shown in Figs. 8 to 10.

As described above according to the navigation device of the present example, similar effects to those in the first example described above can be achieved.

### Third Example

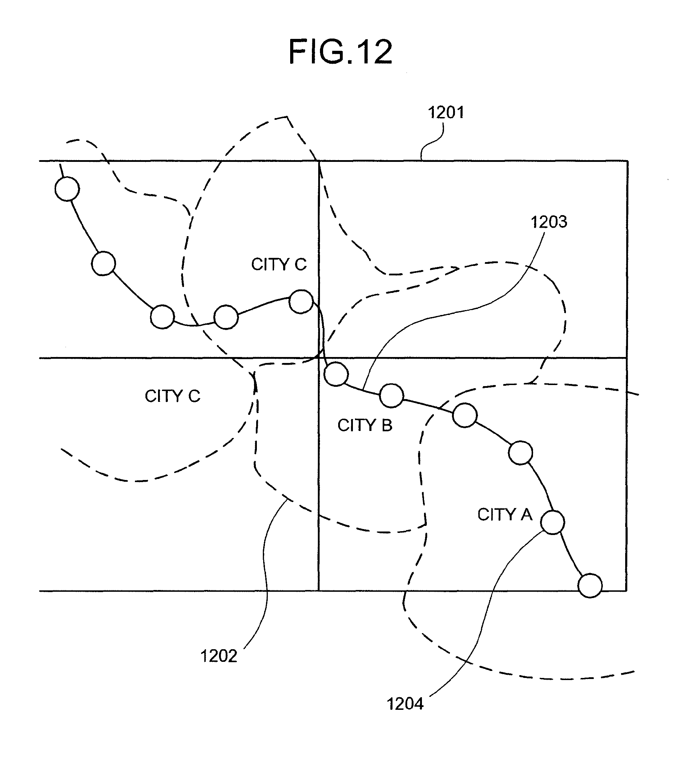

Fig. 12 is an explanatory diagram illustrating a parcel and a polygon among map data used in a common navigation device. Before explaining procedures in a process performed by the navigation device according to the third example, the parcel and the polygon are explained with reference to Fig. 12. A parcel 1201 is each rectangular area that is obtained by sectioning geography on a map into blocks according to specified latitude and longitude. Since it is a conventional technology, the explanation thereof is omitted, however, for example, road data and background data are referred in a unit of the parcel 1201 at displaying a map.

A polygon 1202 is configuration data that indicates an area of a city, and defines a boundary with another city. The parcel 1201 and the polygon 1202 are not consistent with each other, and there are cases where one of the polygons 1202 exists over plural parcels 1201, and where plural polygons 1202 (it can be a part thereof) exist within one of the parcels 1201. The links and nodes forming the guide route are present on the parcel 1201 and the polygon 1202. In the present example, the polygon 1202 is provided for each city, and this polygon is explained as a city area polygon. Information that concerns a city name indicating the city area polygon is associated with each city area polygon as the point information that concerns the city.

The guide route that is a series of links formed by the link 1203 and the node 1204 shown in Fig. 12 can be included in one of the polygons 1202, or can be present over plural polygons 1202.

### (Procedures in Process by Navigation Device)

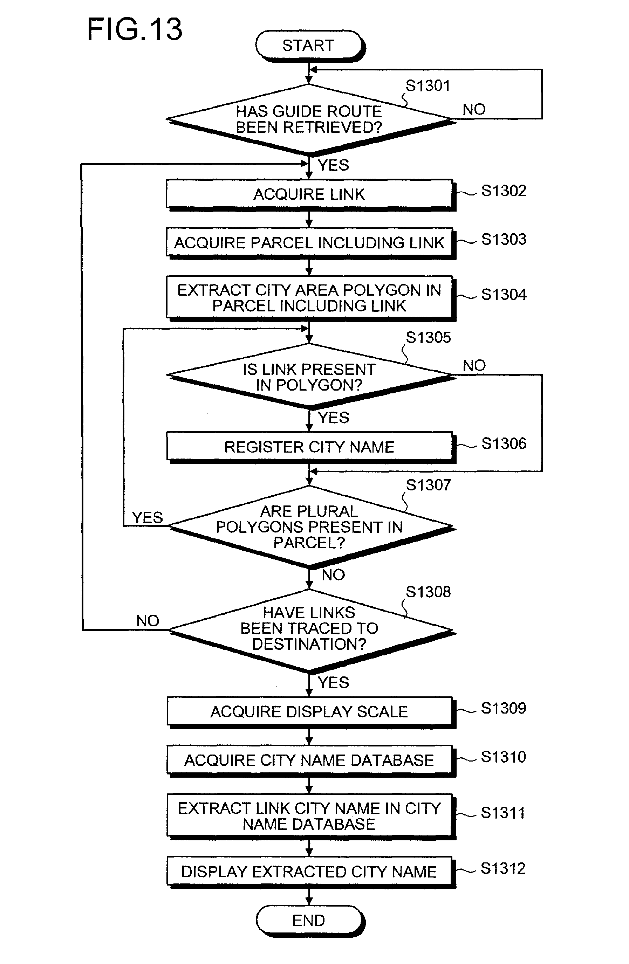

Fig. 13 is a flowchart illustrating procedures in a process performed by the navigation device according to the third example. In the process shown in Fig. 3, waiting occurs until it is determined that a guide route has been retrieved (step S1301: NO). When it is determined that a guide route has been retrieved (step S1301: YES), one link is acquired from among links forming the guide route (step S1302). At step S1302, for example, the first link at the departure point is acquired from among the links forming the guide route. Then, a parcel including the acquired link is acquired (step S1303).

A city area polygon that is present in the acquired parcel is extracted (step S1304). It is determined whether a link forming the guide route is present in the extracted city area polygon (step S1305). In Fig. 13, it is described as "is link present in polygon?" When it is determined that a link forming the guide route is present in the extracted city area polygon (step S1305: YES), the city name that is associated with the city area polygon is registered in a predetermined memory area (step 51306). When it is determined that a link forming the guide route is not present in the city area polygon (step S1305: NO), the process proceeds to step S1307.

Subsequently, it is determined whether more than one city area polygon is present in the acquired parcel (step S1307). In Fig. 13, it is described as "are plural polygons present in parcel?" When it is determined that more than one city area polygon is present in the acquired parcel (step S1307: YES), the process proceeds to step S1305.

On the other hand, when it is determined that not more than one city area polygon is present in the acquired parcel (step S1307: NO), it is determined whether links have been traced to the destination (step 51308). When it is determined that links have not been traced to the destination (step S1308: NO), the process proceeds to step S1302.

When it is determined that links have been traced to the destination (step S1308: YES), a display scale is acquired (step S1309). Then, a city name database corresponding to the acquired display scale is obtained (step S1310).

Although illustration is omitted, at step S1310, a city name database similar to the wide-area city name database 600 and the detailed city name database 700 shown in Figs. 6 and 7 is acquired. The city name database to be acquired may only enable extraction of the city name 803 corresponding to the display scale, and can be the same city name database as the wide-area city name database 600 and the detailed city name database 700 shown in Figs. 6 and 7, or can be a database that does not include the city radiuses.

Based on the acquired city name database, the city name 803 that coincides with the registered city name is extracted from the city names 803 stored in the city name database (step S1311). The extracted city name 803 is displayed on the display 406 (step S1312), and the process is ended. The display mode is similar to that of the display screens shown in Figs. 8 to 10.

As described above according to the navigation device of the present example, similar effects to those in the first example described above can be achieved.

The route display method explained in the present example can be implemented using a computer, such as a personal computer and a work station, to execute a program that is prepared in advance. The program is recorded on a computer-readable recording medium such as a hard disk, a flexible disk, a CD-ROM, an MO, and a DVD, and is executed by a computer reading from the recording medium. Moreover, the program can be a transmission medium that can be distributed through a network such as the Internet.

## Claims

1. A route display apparatus comprising:
an extracting unit that extracts point information on a city existing along a guide route to a destination;
a display unit that includes a display screen that displays the guide route; and
a display control unit that displays a schematic route that is formed with the point information, extracted by the extracting unit, and at least one single line segment that connects the point information according to the guide route.

2. The route display apparatus according to claim 1, wherein the display control unit displays the schematic route in a positional relation that corresponds to position coordinates included in the point information extracted by the extracting unit.

3. The route display apparatus according to claim 1, wherein the display control unit displays the schematic route by connecting the point information, extracted by the extracting unit, with at least one single line segment and a length of the single line segment is fixed.

4. The route display apparatus according to claim 1, wherein the display control unit displays the schematic route by connecting the point information, extracted by the extracting unit, with at least one single line segment and a length of the single line segment corresponds to a distance between the point information, based on the point information extracted by the extracting unit.

5. A route display method comprising:
an extracting step of extracting point information on a city existing along a guide route to a destination; and
a display step of displaying a schematic route that is formed with the point information extracted at the extracting step and at least one single line segment that connects the point information according to the guide route.

6. A route display program that causes a computer to execute the route display method according to claim 5.

7. A recording medium that stores therein the route display program according to claim 6 in a computer-readable manner.
